# EUROPÄISCHE PATENTSCHRIFT

(11) **EP 1 242 732 B1**
(45) Veröffentlichungstag und Bekanntmachung des Hinweises auf die Patenterteilung: **07.02.2007**
(21) Anmeldenummer: 00993429.0
(22) Anmeldetag: 15.12.2000
(51) Int. Cl.: F02D 11/10, F02D 41/14, B60W 10/04, F02D 41/04, F02D 41/26, F02D 37/02

(54) **VERFAHREN UND VORRICHTUNG ZUR STEUERUNG DER ANTRIEBSEINHEIT EINES FAHRZEUGS**
METHOD AND DEVICE FOR CONTROLLING THE DRIVE UNIT OF A VEHICLE
PROCEDE ET DISPOSITIF DE COMMANDE DE L'UNITE D'ENTRAINEMENT D'UN VEHICULE

(30) Priorität: 18.12.1999 DE 19961291; 04.04.2000 DE 10016647; 24.11.2000 DE 10058355
(43) Veröffentlichungstag der Anmeldung: 25.09.2002
(73) Patentinhaber: ROBERT BOSCH GMBH, 70442 Stuttgart (DE)
(72) Erfinder: KAISER, Lilian, 70597 Stuttgart (DE); JESSEN, Holger, 71642 Ludwigsburg (DE)
(86) Internationale Anmeldenummer: PCT/DE2000/004474
(87) Internationale Veröffentlichungsnummer: WO 2001/044639

(56) Entgegenhaltungen:
- EP-A- 0 937 886
- US-A- 4 708 111
- US-A- 4 730 590

## Beschreibung

### Stand der Technik

Die Erfindung betrifft ein Verfahren und eine Vorrichtung zur Steuerung der Antriebseinheit eines Fahrzeugs.

Bei modernen Fahrzeugsteuerungen wirken auf die vorhandenen Stellglieder (z.B. Antriebseinheit, Getriebe, etc.) eine Vielzahl von zum Teil gegensätzlichen Vorgaben. So soll beispielsweise die Antriebseinheit eines Fahrzeugs auf der Basis eines vom Fahrer vorgegebenen Fahrwunsches, Sollwerten von externen und/oder internen Regel- und Steuerfunktionen, wie beispielsweise einer Antriebschlupfregelung, einer Motorschleppmomentenregelung, einer Getriebesteuerung, einer Drehzahl- und/oder Geschwindigkeitsbegrenzung und/oder einer Leerlaufdrehzahlregelung gesteuert werden. Diese Sollvorgaben zeigen zum Teil entgegengesetzte Auswirkungen, so daß, da die Antriebseinheit lediglich eine Sollwertvorgabe einstellen kann, diese Sollwertvorgaben koordiniert werden müssen, d.h. eine zu realisierende Sollwertvorgabe auszuwählen bzw. zu bestimmen ist.

Im Zusammenhang mit der Steuerung einer Antriebseinheit ist aus der DE 197 39 567 A1 eine derartige Koordination verschiedener Sollmomentenwerte bekannt. Dort werden durch Maximal- und/oder Minimalwertauswahl aus den Momentensollwerten Sollwerte für die Stellpfade der Antriebseinheit ausgewählt, die im aktuellen Betriebszustand durch Bestimmung der Größen der einzelnen Steuerparameter der Antriebseinheit, beispielsweise bei einer Brennkraftmaschine der Füllung, des Zündwinkels und/oder der einzuspritzenden Kraftstoffmenge, realisiert werden. Randbedingungen der Einstellung der Sollwerte werden dabei nicht berücksichtigt.

Aus der US 4,708,111 ist ein elektronisch gesteuertes Kraftstoffeinspritzsystem zur Steuerung der Kraftstoffmenge bekannt, die in jeden Zylinder eines Dieselmotors durch eine Kraftstoffeinspritzpumpe eingespritzt werden soll. Ferner ist ein Positionierungsservosystem vorgesehen, das eine Minimalzeitsteuereinheit umfasst. Die Minimalzeitsteuereinheit leitet einen Steuereingabewert eines Aktuators von einem Kennfeld ab, das auf der Basis des nicht linearen Dynamikmodells des Aktuators beruht als Funktion einer Abweichung zwischen einer aktuellen und einer gewünschten Position, eines Stroms, der durch den Aktuator fließt und einer Geschwindigkeit eines Kraftstoffeinstellelements, die von einer Geschwindigkeitsschätzungseinheit geschätzt wird. Aus der Druckschrift "Endurance Increase by Cyclic Control, Journal of Guidance, vol. 9, No. 1, 1985" ist die Anwendung einer zyklischen Steuerung auf einer Flugreise bekannt, um Kraftstoff einzusparen. Dabei ist ein stationärer Flug im Allgemeinen nicht optimal und es können Verbesserungen durch nicht stationären Flug mit zyklischer Steuerung von Schub und Auftrieb erreicht werden. Dadurch kann die maximale Reichweite im Vergleich zum stationären Flug erhöht werden.

### Vorteile der Erfindung

Die Definition einer Anforderung der Antriebseinheit als Sollgröße für eine Ausgangsgröße/Stellzeit-Wertepaar ergibt sich bei der Koordination verschiedener Anforderungen eine Unabhängigkeit von motorspezifischen Stellpfaden. Die Schnittstellendefinition als Sollgröße/Stellzeit-Wertepaar eignet sich daher unabhängig von der konkreten Art des Antriebs für alle Arten von Antrieben. Nicht motorspezifische Koordinatoren sind daher ohne Veränderung bei verschiedenen Arten von Antrieben, bei Ottomotoren, Dieselmotoren, Elektroantrieben, etc. einsetzbar.

Von besonderem Vorteil ist, dass Erweiterungen des Systems, das heißt das Hinzufügen weiterer Sollgrößen/Stellzeit-Wertepaare ohne Strukturänderungen in einfacher Weise ermöglicht werden.

Die konkrete Realisierung der Anforderung (Sollgröße und Stellzeit) erfolgt dann abhängig vom aktuellen Betriebspunkt auf den geeigneten Stellpfaden der Antriebseinheit. Durch betriebspunktunabhängige Forderung einer Stellzeit für jede Sollgröße kann dieser motorspezifische Teil der Steuerung getrennt vom motorunabhängigen Teil entwickelt werden.

Durch die Definition der genannten, abstrakten und physikalisch interpretierbaren Schnittstelle wird die Gesamtstruktur der Motorsteuerung übersichtlicher.

Durch die Trennung zwischen motorunabhängigen und motorspezifischen Komponenten infolge der Einführung der Sollgrößen/Stellzeitschnittstelle wird ein weiterer Freiheitsgrad geschaffen, der die Umsetzung der Anforderung im motorspezifischen Teil der Motorsteuerung betrifft. Es werden die Möglichkeiten für die Realisierung der Anforderung durch verschiedene Stellpfade vergrößert und zusätzliches Optimierungspotential freigesetzt.

Ein weiterer zusätzlicher Freiheitsgrad ergibt sich aus der Vorgabe einer kontinuierlich veränderlichen Stellzeit zum Sollwert, wodurch eine präzise Vorgabe und Umsetzung der Eingriffe in die Antriebseinheit ermöglicht ist.

Durch die Koordination von Sollgrößenanforderungen und Stellzeitanforderungen werden in vorteilhafter Weise die verschiedenen Anforderungen kombiniert, so dass zu Steuerung der Antriebseinheit ein Anforderungspaar (jeweils bezüglich Stellzeit und Sollgröße) bereitgestellt wird.

Weitere Vorteile ergeben sich aus der nachfolgenden Beschreibung von Ausführungsbeispielen bzw. aus den abhängigen Patentansprüchen.

### Zeichnung

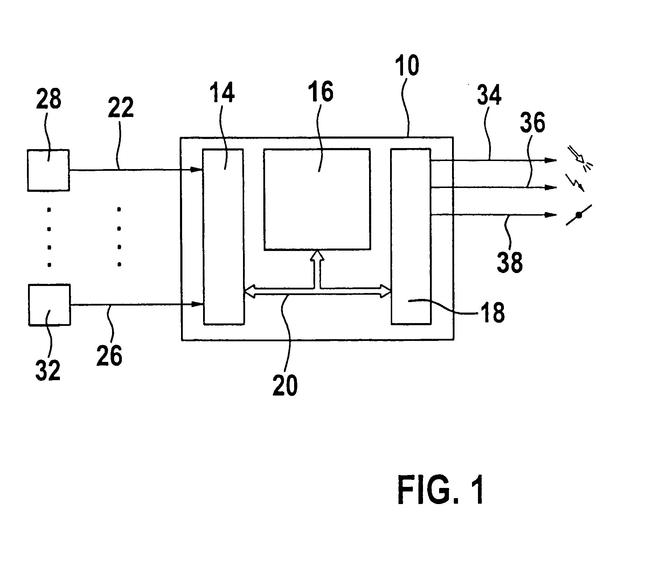

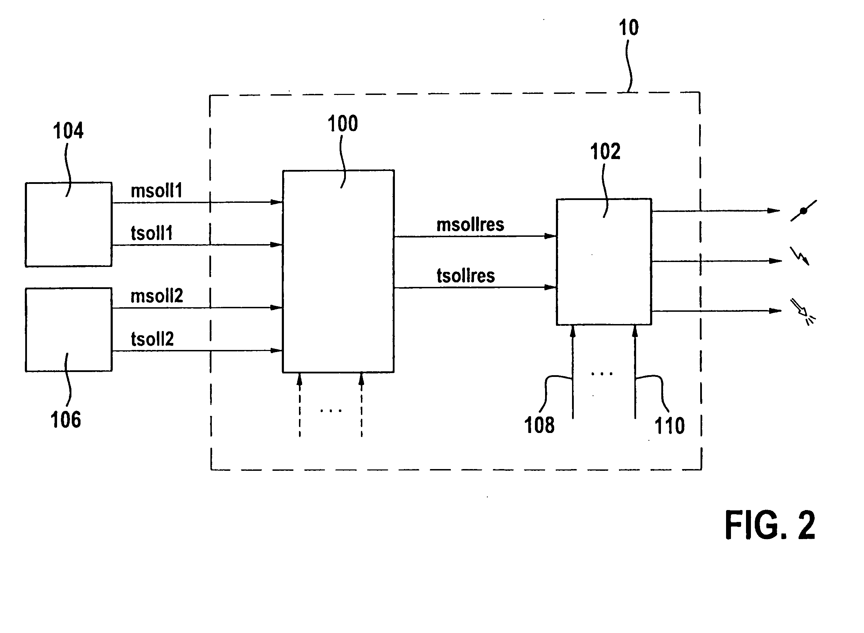

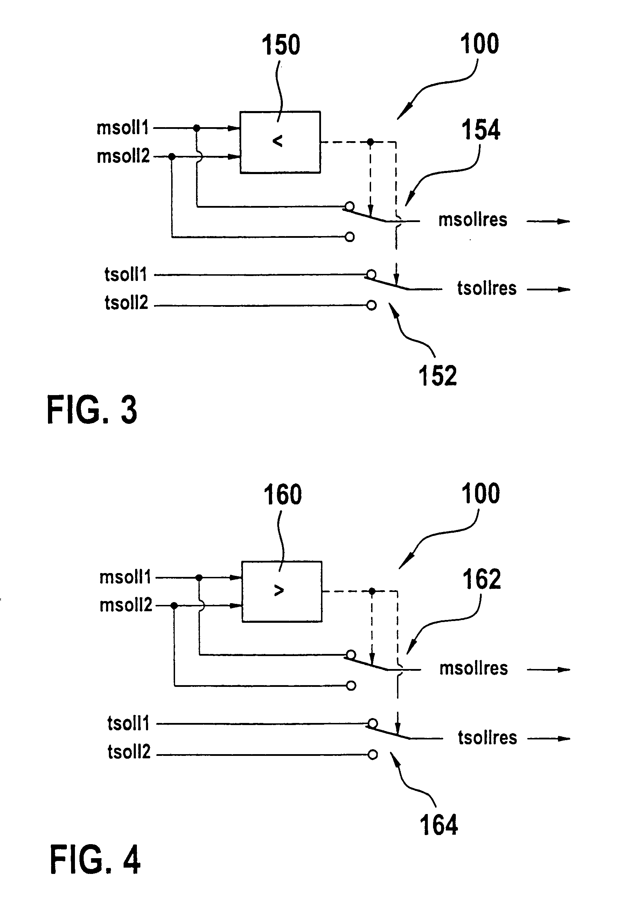

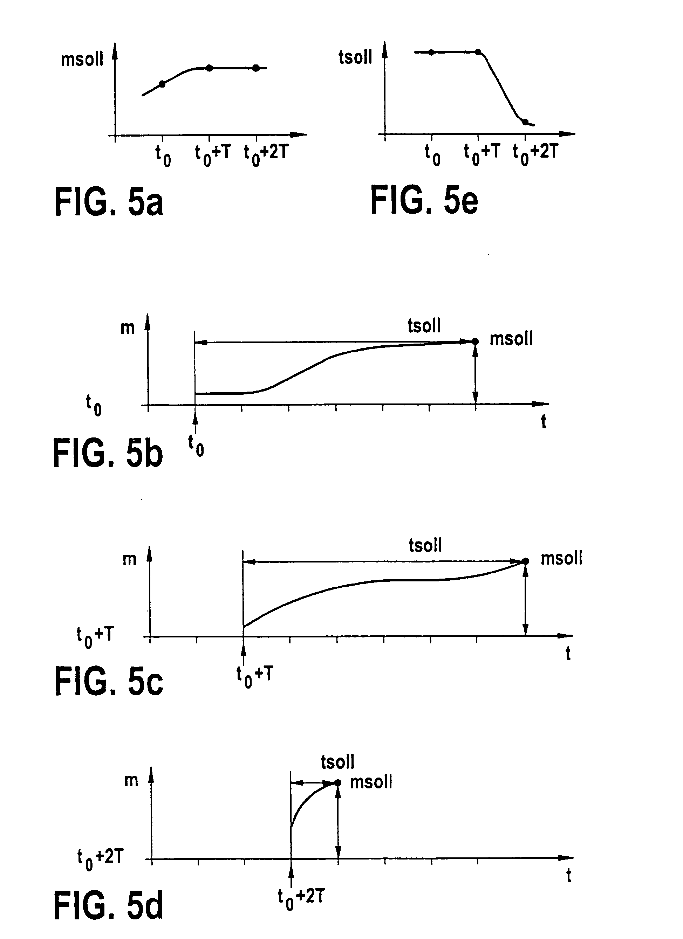

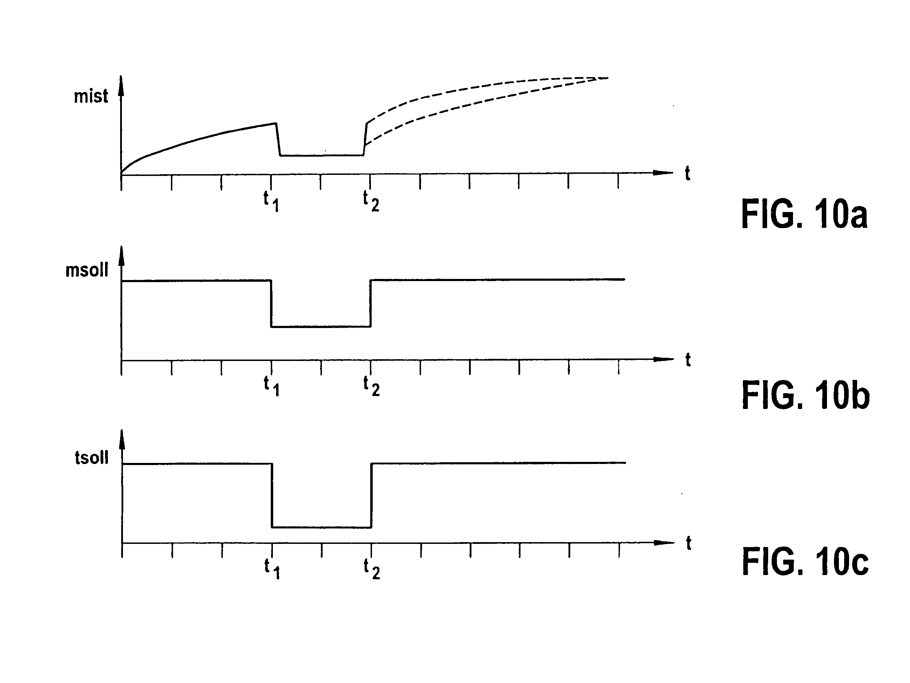

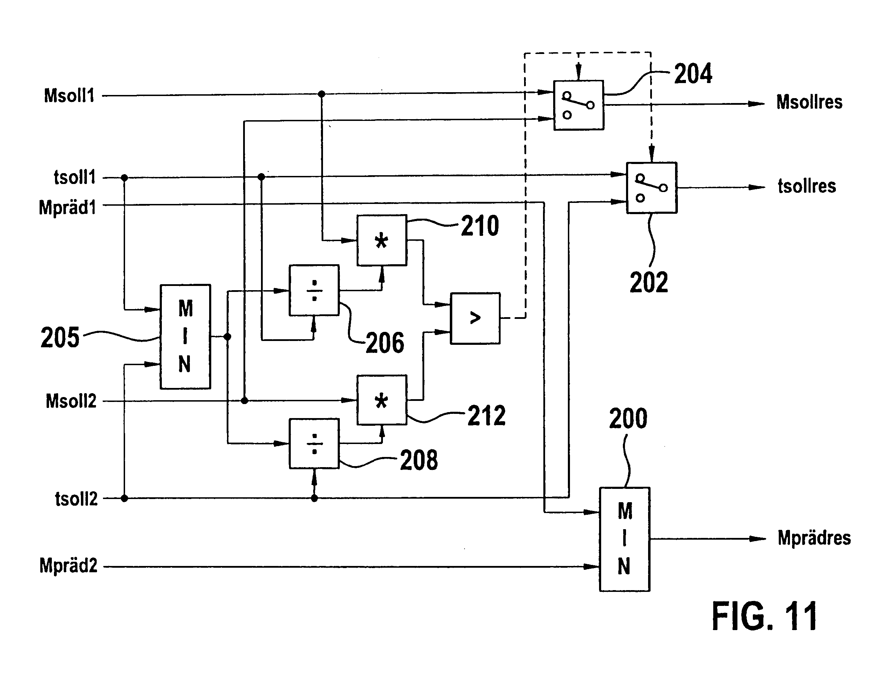

Die Erfindung wird nachstehend anhand der in der Zeichnung dargestellten Ausführungsformen näher erläutert. Dabei zeigt Figur 1 ein Übersichtsschaltbild einer Steuereinrichtung zur Steuerung einer Antriebseinheit. Figur 2 zeigt ein Ablaufdiagramm, welches ein bevorzugtes Ausführungsbeispiel der Sollgröße/Stellzeit-Schnittstelle darstellt. Die Wirkungsweise dieser Schnittstelle ist anhand des Zeitdiagramms der Figur 5 skizziert. In den Figuren 3 und 4 und 6 bis 9 sind Ablaufdiagramme dargestellt, welche bevorzugte Ausführungsbeispiele der Koordination der Sollgrößen/Stellzeit-Anforderungen darstellen. Im Zeitdiagramm der Figur 10 ist an einem Beispiel die Wirkungsweise der Sollgrößen/Stellzeit-Vorgabe und -Koordination verdeutlicht. In Figur 11 ist ein weiteres Ausführungsbeispiel zur Koordination der Sollgrößen/Stellzeit-Anforderungen dargestellt.

### Beschreibung von Ausführungsbeispielen

Figur 1 zeigt ein Blockschaltbild einer Steuereinrichtung zur Steuerung einer Antriebseinheit, insbesondere einer Brennkraftmaschine. Es ist eine Steuereinheit 10 vorgesehen, welcher als Komponenten eine Eingangsschaltung 14, wenigstens eine Rechnereinheit 16 und eine Ausgangsschaltung 18 aufweist. Ein Kommunikationssystem 20 verbindet diese Komponenten zum gegenseitigen Datenaustausch. Der Eingangsschaltung 14 der Steuereinheit 10 werden Eingangsleitungen 22 bis 26 zugeführt, welche in einem bevorzugten Ausführungsbeispiel als Bussystem ausgeführt sind und über die der Steuereinheit 10 Signale zugeführt werden, welche zur Steuerung der Antriebseinheit auszuwertende Betriebsgrößen repräsentieren. Diese Signale werden von Meßeinrichtungen 28 bis 32 erfaßt. Derartige Betriebsgrößen sind Fahrpedalstellung, Motordrehzahl, Motorlast, Abgaszusammensetzung, Motortemperatur, etc. Über die Ausgangsschaltung 18 steuert die Steuereinheit 10 die Leistung der Antriebseinheit. Dies ist in Figur 1 anhand der Ausgangsleitungen 34, 36 und 38 symbolisiert, über welche die einzuspritzende Kraftstoffmasse, der Zündwinkel und/oder eine elektrisch betätigbare Drosselklappe zur Einstellung der Luftzufuhr zur Brennkraftmaschine betätigt werden. Über die dargestellten Stellpfade werden die Luftzufuhr zur Brennkraftmaschine, der Zündwinkel der einzelnen Zylinder, die einzuspritzende Kraftstoffmasse, der Einspritzzeitpunkt und/oder das Luft-/Kraftstoffverhältnis, etc. eingestellt. Neben den geschilderten Eingangsgrößen sind weitere Steuersysteme des Fahrzeugs vorhanden, die der Eingangsschaltung 14 Vorgabegrößen, beispielsweise Drehmomentensollwert, übermitteln. Derartige Steuersysteme sind beispielsweise Antriebsschlupfregelungen, Fahrdynamikregelungen, Getriebesteuerungen, Motorschleppmomentenregelungen, etc. Neben den dargestellten Sollwertvorgaben, den externen Sollwertvorgaben, zu denen auch eine Sollwertvorgabe durch den Fahrer in Form eines Fahrwunsches und/oder eine Geschwindigkeitsbegrenzung gehört, sind interne Vorgabengrößen zur Steuerung der Antriebseinheit vorhanden, beispielsweise eine Drehmomentenänderung einer Leerlaufregelung, eine Drehzahlbegrenzung, die eine entsprechende Sollvorgabengröße ausgibt, eine Drehmomentenbegrenzung und/oder Begrenzungen aus Bauteileschutz und/oder eine separate Sollvorgabegröße im Start.

Mit den einzelnen Sollwertvorgabegrößen sind Randbedingungen oder Eigenschaften verbunden, welche die Art und Weise der Umsetzung der Sollwertvorgabegrößen darstellen. Dabei können je nach Anwendungsbeispiel mit den Sollwertvorgabegrößen eine oder mehrere Eigenschaften verbunden sein. Es hat sich gezeigt, dass eine wesentliche Information die Stellzeit ist, innerhalb derer die Sollwertvorgabe einzustellen ist. Daneben können weitere Eigenschaften der Sollwertvorgabe übermittelt werden, beispielsweise deren Priorität. Unter Stellzeit wird dabei der Zeitraum verstanden, in dem die Sollgröße mindestens gestellt werden muß. Der Verlauf der von der Sollgröße beeinflussten Istgröße zwischen der aktuellen (Start-)größe und der Sollgröße (Endgröße) in der Stellzeit ist abhängig von der gewählten Zielsetzung frei bestimmbar. Dieser Verlauf kann somit an den Motor angepaßt werden und nach wenigstens einem Optimierungskriterium (z.B. minimaler Kraftstoffverbrauch) optimiert werden. Die Istgröße muß lediglich im Zeitpunkt der Stellzeit, d.h. bei Beendigung der Stellzeit, erreicht sein.

Die beschriebene Vorgabe von Sollgröße und Stellzeit als Wertepaar ist nicht nur in Verbindung mit Brennkraftmaschinen wie Otto- oder Dieselmotoren, sei es mit Saugrohreinspritzung oder Direkteinspritzung, sondern auch in Verbindung mit anderen Antriebskonzepten, beispielsweise Elektromotoren, einzusetzen.

Als Vorgabegröße (Sollgröße) wird in einem bevorzugten Ausführungsbeispiel ein Drehmoment der Antriebseinheit vorgegeben. In anderen Anwendungsfällen können als Vorgabegrößen auch andere Ausgangsgrößen der Antriebseinheit wie Leistungswerte, Drehzahlen, etc. als Vorgabegrößen vorgesehen sein.

In Figur 2 ist ein Ablaufdiagramm dargestellt, welches die oben dargestellte Schnittstelle sowie die Umsetzung des Vorgabewertepaares in Stellgrößen am Beispiel eines einfachen Ausführungsbeispiels darstellt. Die Steuereinheit 10 umfaßt dabei im wesentlichen einen Koordinator 100 sowie einen Umsetzer 102. Neben nicht dargestellten Eingangsgrößen, beispielsweise den oben genannten, werden von externen Steuersystemen, wie beispielsweise einer Antriebsschlupfregelung 104 und dem Fahrer 106 als Eingangsvorgabegrößen jeweils Sollmomente MSOLL1 bzw. MSOLL2 sowie die zugehörigen Stellzeiten TSOLL1 und TSOLL2 zugeführt, innerhalb derer das vorgegebenen Sollmoment einzustellen ist. Diese Vorgabewertepaare werden dem Koordinator 100 zugeführt. Dort wird nach Maßgabe beispielsweise einer der nachfolgenden Strategien, ggf. unter Berücksichtigung weiterer Vorgabewertepaare ein resultierendes Vorgabewertepaar MSOLLRES und TSOLLRES ausgewählt. Dieses wird dem Umsetzer 102 zugeführt. Im Umsetzer 102 wird unter Berücksichtigung des aktuellen Betriebszustands der Antriebseinheit, was auf der Basis von Betriebsgrößen wie Motordrehzahl, Motorlast, Istmoment, etc. erfolgt (vgl. symbolische Leitungen 108 bis 110), die Stellgrößen zur Steuerung der Luftzufuhr, der Zündung und/oder der Kraftstoffeinspritzung gebildet. Dabei sind in einem vorteilhaften Ausführungsbeispiel zur Auswahl des jeweiligen Stellpfades Tabellen vorgesehen, in denen abhängig von dem aktuellen Betriebszustand der Antriebseinheit die jeweils minimalen Stellzeiten der einzelnen Stellpfade für eine bestimmte Drehmomentänderung eingetragen sind. Abhängig von der vorgegebenen Sollstellzeit und der vorgesehenen Drehmomentenänderung wird nach Maßgabe einer vorgegebenen Strategie (z.B. verbrauchsoptimal) der Stellpfad ausgewählt, über den die Drehmomentenänderung innerhalb der Sollstellzeit realisiert werden kann. Ist es nicht möglich, die Drehmomentenänderung allein über einen Pfad durchzuführen, wird eine Kombination der Stellpfade ausgewählt, die sicherstellt, dass das Sollmoment innerhalb der vorgegebenen Stellzeit realisiert wird.

In einem anderen Ausführungsbeispiel ist zwischen dem Koordinator 100 und dem Umsetzer 102 ein weiterer Koordinator vorgesehen, in dem die resultierenden Größen des Koordinators 100, der lediglich motorunabhängige Größen betrifft, mit motorspezifischen Sollgrößen/Stellzeit-Wertepaare (Drehmomentenbegrenzungen, Drehzahlbegrenzungen, etc.) entsprechend koordiniert werden. Ausgangssignal ist ein resultierendes Sollmoment/Stellzeit-Wertepaar, welches dem Umsetzer 102 zugeführt wird und entsprechend der obigen Darstellung in die einzelnen Stellgrößen umgesetzt wird.

In Figur 5 sind Zeitdiagramme aufgetragen, welche den Verlauf des Drehmoments der Antriebseinheit zu verschiedenen Zeitpunkten bei Veränderung von Sollmomentenwert und Sollstellzeit skizzieren. Figur 5a zeigt dabei den zeitlichen Verlauf der Sollmomentenvorgabe, Figur 5e den der Stellzeit, während in den Figuren 5b bis 5d der Verlauf des Istmoments M aufgetragen ist. Der Verlauf der Sollmomentenvorgabe zeigt Figur 5a, wobei das Sollmoment von der Zeit T0 bis zum Zeitpunkt T0+T ansteigt, dann bis zum Zeitpunkt T0+2T konstant bleibt. Die Stellzeit bleibt zwischen den Zeitpunkten T0 und T0+T konstant, während sie zum Zeitpunkt T0+2T verringert ist. Entsprechend zeigt sich der zu erwartende Momentenverlauf, der in Figur 5b zum Zeitpunkt T0 und in Figur 5c zum Zeitpunkt T0+T dargestellt ist. Die Sollstellzeit ist konstant, der Sollmomentenwert ist erhöht, so daß der zu erwartende Momentenverlauf entsprechend angepaßt ist. Zum Zeitpunkt T0+2T bleibt der Sollmomentenwert konstant, die Stellzeit ist jedoch erheblich verringert, so dass sich eine wesentlich schnellere Momentenänderung ergeben wird. Wesentlich dabei ist, dass die Stellzeit sich kontinuierlich verändert und mit jedem Zeitpunkt angepaßt wird (z.B. wird die Stellzeit bei unveränderten Bedingungen und gleichem Moment immer kleiner, um sicherzustellen, dass das Moment nach der urspünglichen Stellzeit eingestellt ist.

Für die Koordination der Wertepaare in dem Koordinator 100 bzw. den in der Motorsteuerung vorgesehenen Koordinatoren haben sich verschiedene Strategien als geeignet erwiesen, die Minimumkoordination, die Maximumkoordination, die additive Koordination, die subtraktive Koordination, die stellzeitorientierte Maximalkoordination und/oder die stellzeitorientierte Minimalkoordination.

Im Ablaufdiagramm der Figur 3 ist ein Beispiel für die Minimumkoordination dargestellt. Diese besteht darin, dass die Werte der Sollmomente verglichen werden und als resultierendes Sollmoment das kleinste ausgewählt wird. Die resultierende Stellzeit ist dann die diesem Moment zugeordnete Stellzeit. Bei dieser Koordinationsstrategie ist die Anzahl der zu koordinierenden Wertepaare unbegrenzt. Neben der Stellzeit können in entsprechender Weise weitere Informationen, wie beispielsweise die den einzelnen Eingriffen zugeordneten Prioritäten oder andere Informationen analog ausgewählt werden.

Figur 3 zeigt ein Ablaufdiagramm der Minimumkoordination im Koordinator 100. Zugeführt werden die Sollmomente MSOLL1 und MSOLL2, die auf einen Vergleicher 150 geführt werden. Dieser Vergleicher ermittelt, welcher der beiden Sollwerte der kleinste ist. Abhängig vom Ergebnis betätigt der Vergleicher 150 über sein Ausgangssignal Schaltelemente 152 bzw. 154, durch die der kleinste Momentensollwert als resultierendes Sollmoment ausgegeben wird. Ferner werden dem Koordinator 100 die Stellzeiten TSOLL1 und TSOLL2 zugeführt, wobei der Vergleicher 150 das Schaltelement 152 derart schaltet, dass die dem jeweils kleinsten Moment zugeordnete Stellzeit als resultierende Stellzeit TRES ausgegeben wird.

Figur 4 zeigt ein Ablaufdiagramm für die Maximumkoordination. Bei der Maximumkoordination werden die Werte der Sollmomente ebenfalls verglichen, allerdings nicht das kleinste, sondern das größte der Sollmomente ausgewählt. Resultierende Stellzeit ist in diesem Fall auch die dem größten Moment zugeordnete Stellzeit. Analog zur Minimumkoordination umfaßt der Koordinator 100 zur Maximumkoordination einen Vergleicher 160, dem die Sollmomente MSOLL1 und MSOLL2 zugeführt werden und der über sein Ausgangssignal Schaltelemente 162 und 164 betätigt. Der Vergleicher 160 ermittelt das größte der zugeführten Momente und schaltet entsprechend die Schaltelemente 162 und 164. Dies erfolgt dabei derart, dass über das Schaltelement 162 der größte Momentenwert als resultierender Sollmomentenwert MSOLLRES und die dem größten Momentenwert zugeordnete Stellzeit als resultierende Stellzeit TSOLLRES ausgewählt wird.

Die Minimumkoordination wird insbesondere bei momentenreduzierenden Eingriffen, insbesondere bei Getriebeschalteingriffen und Antriebsschlupfregeleingriffen angewendet, während die Maximumauswahl bei momentenerhöhenden Eingriffen, wie beispielsweise dem Eingriff einer Motorschleppmomentenregelung, Anwendung findet.

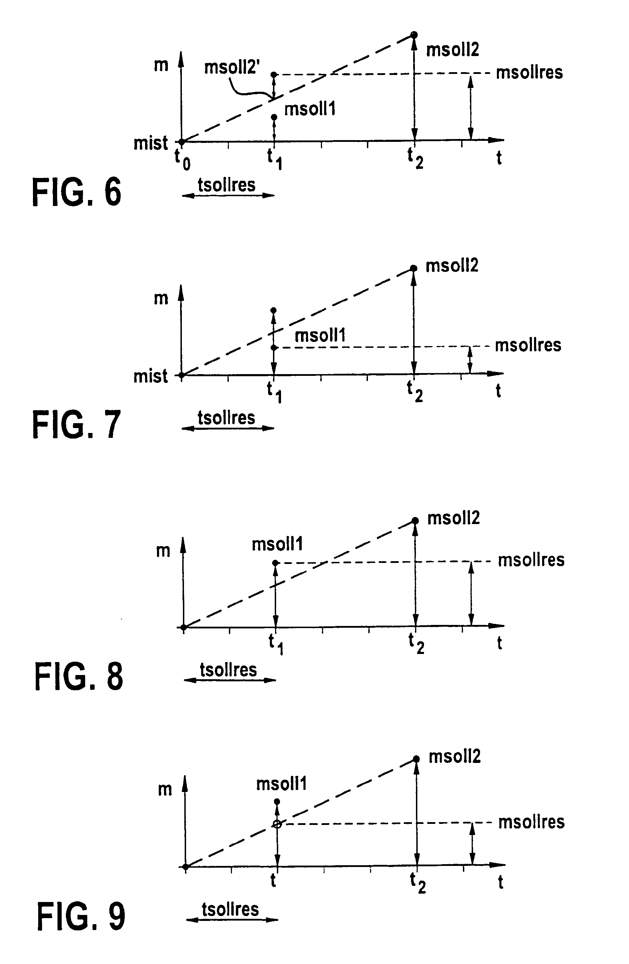

Es hat sich gezeigt, dass die Minimum- und die Maximumkoordination nicht ausreichen, alle denkbaren Anwendungsfälle abzudecken. Z.B. beim Zuschalten von Nebenaggregaten wie einer Klimanlage hat die Antriebseinheit in relativ kurzer Stellzeit ein zusätzliches Drehmoment zu erzeugen. Trifft dies mit einer Erhöhung des Sollmoments zusammen, kann es bei der Maximal- oder Minimalwertkoordination zu einem unkomfortablem Momentenverlauf kommen. Daher ist vorgesehen, dass die Stellzeiten und Sollmomenten nicht unabhängig voneinander koordiniert werden, sondern miteinander verknüpft werden. Im Zeitdiagramm der Figur 6 ist eine Koordinationsstrategie dargestellt, in der Sollmomentenwerte addiert werden. Bei dieser sogenannten additiven Koordination von Sollmoment/Stellzeit-Wertepaare wird zunächst die kleinste Stellzeit ermittelt. Durch Interpolation werden dann für diese Stellzeit für das wenigstens eine weitere Sollmoment/Stellzeit-Wertepaar ein interpoliertes Sollmoment ermittelt. Resultierendes Sollmoment ist die Summe der gegebenenfalls interpolierten Sollmomente bei der kleinsten Stellzeit. Resultierende Stellzeit ist die kleinste Stellzeit. Als Interpolationsfunktion ist je nach Anwendungsfall eine lineare, expontentielle, monotone oder nicht monotone Funktion vorgesehen. Die Interpolation erfolgt dabei auf der Basis des Istmomentes oder eines anderen Momentes, beispielsweise des letzten Sollmomentes. Auch hier können andere Informationen neben der Stellzeit, beispielsweise Prioritäten, ausgewählt werden.

In Figur 6 ist das Moment M über der Zeit aufgetragen, wobei der Koordinatenursprung der aktuelle Zeitpunkt T0 und das aktuell vorliegende Istmoment MIST repräsentiert. Resultierende Stellzeit zur Einstellung des Sollmomente ist die kleinste der zugeführten Stellzeiten TSOLLRES, d.h. T1. Es sollen im gezeigten Beispiel zwei Sollmomente koordiniert werden, nämlich MSOLL2, dem die Stellzeit T2 zugeordnet ist und MSOLL1, dem die Stellzeit T1 zugeordnet ist. Um bei Auswahl der kürzesten Stellzeit nicht nur der Realisierung des Sollmomentes MSOLL1 gerecht zu werden sondern auch der des Sollmomentes MSOLL2 wird auf der Basis der in diesem Beispiel vorgesehenen Interpolationsgeraden (gestrichelt) der zum Zeitpunkt T1 bei einer Realisierung des Sollmomentenwertes MSOLL2 erreichte Momentenbetrag MSOLL2' ausgerechnet. Dieser wird dann auf den zum Zeitpunkt T1 zu erreichenden Sollmomentenwert MSOLL1 aufaddiert, wobei durch die Addition der beiden Werte der resultierende Sollmomentenwert MSOLLRES gebildet wird. Innerhalb der Zeit T1 wird dann der Sollmomentenwert MSOLLRES realisiert, wobei nicht nur der der kleinsten Stellzeit zugeordnete Sollmomentenwert MSOLL1 sondern auch der der anderen Stellzeit zugeordnete Wert MSOLL2 berücksichtigt wird.

Entsprechend ist eine subtraktive Koordination vorgesehen, die z.B. beim Abschalten von Verbaucher zum Tragen kommt, bei der ebenfalls die kleinste Stellzeit der zugeführten Wertepaare ermittelt wird. Auch hier wird durch Interpolation für das wenigstens eine weitere Wertepaar das bei diesem Zeitpunkt eingenomme, durch Interpolation ermittelte Sollmoment bestimmt. Das resultierende Sollmoment ist dann die Differenz der interpolierten Sollmomente der kleinsten Stellzeit entsprechend der angegebenen Verknüpfung. Die resultierende Stellzeit ist die kleinste Stellzeit. Die Interpolation sowie die Berücksichtigung ggf. weiterer Informationen erfolgt analog zur additiven Koordination.

Figur 7 zeigt den Verlauf des Drehmoments über der Zeit analog zur Figur 6. Auch hier sei die resultierende Stellzeit T1. Das mit dieser Stellzeit zu realisierende Sollmoment sei MSOLL1. Das für den Zeitpunkt T1 interpolierte Sollmoment für das Wertepaar MSOLL2/T2 wird dann von MSOLL1 abgezogen, wodurch das resultierende Sollmoment MSOLLRES entsteht, welches letztendlich in der Sollstellzeit T1 eingestellt wird.

Eine weitere Möglichkeit für die Verknüpfung der Wertepaare ist die stellzeitorientierte Maximal- oder Minimalauswahl. Diese stellt eine Alternative zur Koordination gemäß den Figuren 3 und 4 dar, wobei der Unterschied darin besteht, dass grundsätzlich die kleinste Stellzeit der übermittelten Sollmoment/Stellzeit-Wertepaare ausgewählt wird, während bei der Lösung der Figuren 3 und 4 immer die dem ausgewählten Moment zugeordnete Stellzeit ausgewählt wird. Dadurch werden die dynamischen Verhältnisse besser berücksichtigt. Durch Interpolation werden für diese Stellzeit für die übrigen Wertepaare interpolierte Sollmomente wie oben erwähnt ermittelt. Das resultierende Sollmoment ist dann das kleinste (Minimum) bzw. das größte (Maximum) der Sollmomente zum Zeitpunkt der kleinsten Stellzeit. Resultierende Stellzeit ist die kleinste Stellzeit. Auch hier erfolgt die Interpolation sowie die Berücksichtigung zusätzlicher Informationen entsprechend dem oben gesagten.

Diese Koordinationsstrategie ist anhand der Zeitdiagramme der Figuren 8 und 9 skizziert. Dort ist jeweils das Drehmoment über der Zeit aufgetragen. Die Stellzeit ist jeweils T1 als kleinste der zugeführten Stellzeiten. Gemäß Figur 8 ist das zur Stellzeit T1 gehörige Sollmoment MSOLL1, das zur Stellzeit T2 gehörige MSOLL2. Aus dem Wertepaar MSOLL2/T2 wird der zum Zeitpunkt T1 mittels Interpolation ein Sollmomentenwert berechnet, der dann in einer Maximalwertauswahl mit dem Sollwert MSOLL1 verknüpft wird. Da im gezeigten Beispiel dieser Wert kleiner als der Wert MSOLL1 ist, ist der resultierende Sollmomentenwert MSOLLRES der Wert MSOLL1. Es wird also innerhalb der Zeit T1 der Sollwert MSOLL1 realisisert. In Figur 9 ist die entsprechende Vorgehensweise als Minimumauswahl dargestellt. Auch hier sei die kürzeste Stellzeit T1. Dieser ist der Sollwert MSOLL1 zugeordnet. Das andere Wertepaar bildet MSOLL2 und T2. Die Interpolation ergibt aus diesem Wertepaar einen Sollmomentenwert zum Zeitpunkt T1, der kleiner als der Sollwert MSOLL1 ist. Aufgrund der Minimumauswahl wird also als resultierender Sollwert MSOLLRES der interpolierte Sollwert ausgegeben und innerhalb der Stellzeit TSOLLRES eingestellt.

Die Wirkungsweise der vorstehend geschilderten Vorgabe von Sollmoment/Stellzeit-Wertepaaren und ihrer Koordination ist in Figur 10 anhand einer beispielhaft ausgewählten Betriebssituation unter Anwendung einer Minimumkoordination dargestellt. Dabei zeigt Figur 10a den zeitlichen Verlauf des Istmoments der Antriebseinheit, Figur 10b den des Sollmoments und Figur 10c den der Sollstellzeit. Zunächst sei der Fahrerwunsch das dominierende Element. Der Fahrer gibt einen Sollmomentenwert MSOLL vor, dem eine Stellzeit TSOLL zugeordnet ist und der durch entsprechende Momentenerhöhung gemäß Figur 10a realisiert wird. Zum Zeitpunkt T1 greift ein Antriebsschlupfregler ein. Wegen seines kleineren Sollmoments wird zum Zeitpunkt T1 schlagartig ein kleineres Sollmoment vorgegeben, dem wegen der notwendigen Dynamik des Eingriffs gemäß Figur 10c eine wesentlich kleinere Stellzeit zugeordnet ist (Zeitpunkt T1). Daher wird das Istmoment ab dem Zeitpunkt T1 sehr schnell auf das Sollmoment reduziert. Da das Sollmoment bis zum Zeitpunkt T2 unverändert bleibt, findet keine Momentenänderung mehr bei unveränderter Stellzeit statt. Zum Zeitpunkt T2 ist der Antriebsschlupfregeleingriff beendet, das Sollmoment wird wieder auf den Fahrerwunsch gesetzt (das Sollmoment des Regler ist wieder größer als das des Fahrerwunsches). Dem resultierenden Moment ist die größere Stellzeit zugeordnet. Abhängig vom aktuellen Betriebszustand zum Zeitpunkt T2, welcher sich im Zeitraum zwischen T1 und T2 abhängig von den gewählten Stellpfaden einstellt, ergibt sich im Momentenverlauf entweder eine langsame, die große Stellzeit berücksichtigende Veränderung oder die zunächst bis zum Zeitpunkt T2 sehr schnelle Veränderung, die dann in eine langsamere übergeht (vgl. Figur 10a). Dies tritt z.B. bei langanhaltendem ASR-Eingriff (Anfahrt auf Schnee) auf, da in diesem Fall der Luftfüllungspfad stationär zurückgenommen wird und ein schneller Anstieg unter Umständen infolge fehlender Reserve über dem Zündwinkel nicht erfolgen kann. Ferner können bei vorhandener Reserve weitere Betriebsbedingungen und Anforderungen (z.B. Komfort, Katheizen, Bauteileschutz) eine Rolle bei der Entscheidung über einen schnellen oder langsamen Anstieg spielen.

Figur 11 zeigt ein weiteres Ausführungsbeispiel der Koordination zweier Sollgrößen- und Stellzeitenwertepaaren auf der Basis einer Interpolation. Ferner wird die prädizierte Größe der Sollgröße der beiden Eingriffen ebenfalls im Rahmen der Koordination berücksichtigt. Diese prädizierte Größe stellt die Sollgröße dar, die voraussichtlich zukünftig vorliegen wird (z.B. während eines Eingriffs einer Antriebsschlupfregelung ist die prädizierte Größe die vom Fahrer vorgegebene Sollgröße). Dem in Figur 11 dargestellte Koordinator wird also eine erste Sollgröße (vorzugsweise Sollmoment) Msoll1, eine erste Stellzeitvorgabe tsoll1 sowie ein diesem Wertepaar zugeordnete prädizierte Größe Mpräd1 der Sollgröße zugeführt. Vom einem zweiten Eingriff werden Sollgröße Msoll2, Stellzeit tsoll2 und prädizierte Größe Mpräd2 zugeführt. Die beiden prädizierten Größen Mpräd1 und Mpräd2 werden auf eine Minimalauswahlstufe 200 geführt. Der kleinere der beiden Werte stellt dabei die resultierende prädizierte Größe Mprädres dar, die bei der Umsetzung im Umsetzer 102 berücksichtigt wird (z.B. bei der Bestimmung des Sollwertes für die Füllung (Luftzufuhr) für die Brennkraftmaschine).

Die beiden Stellzeitwerte tsoll1 und tsoll2 werden ebenso wie die Sollgrößenwerte Msoll1 und Msoll2 Schaltelementen 202 bzw. 204 zugeführt, die abhängig von einem Schaltsignal von der gezeigten in die andere Stellung umschalten. Je nach Stellung dieser Schaltelemente wird entweder das erste (Msoll1, tsoll1) oder das zweite Wertepaar (Mso112, tsoll2) als resultierendes Wertepaar (Msollres, tsollres) an die Steuerung der Antriebseinheit weitergegeben.

Das Schaltsignal zur Umschaltung wird aus den beiden Wertpaare abgeleitet durch Interpolation der Sollgrößenwerte zwischen zugehöriger Stellzeit und minimaler Stellzeit. Die beiden Stellzeitenwerte Tsoll1 und Tsoll2 werden auf eine Minimalwertauswahltstufe 205 geführt, in der der minimale Stellzeitwert als der kleinere der beiden Werte ermittelt wird. Der minimale Stellzeitwert wird Divisionsstufen 206 und 208 zugeführt, in denen der Quotient zwischen minimalem Stellzeitwert und der jeweiligen Sollstellzeit Tsoll1 bzw. tsoll2 gebildet wird (tsollmin/tsolll bzw. tsollmin/tsoll2). In jeweils einer Multiplikationsstelle 210 bzw. 212 wird der jeweilige Quotient mit dem zugehörigen Sollgrößenwert Msoll1 bzw. Msoll2 multipiziert (210: Msoll1*tsollmin/tsoll1; 212: Msoll2*tsollmin/tsoll2). Die beiden auf diese Weise bewerteten Sollgrößenwerte werden dann in einem Vergleicher 214 miteinander verglichen. Ist das Ergebnis der Stufe 210 größer als das der Stufe 212, werden die Schaltelemente 202 und 204 derart geschaltet, dass das Wertepaar Msoll1 und tsoll1 als resultierende Größen weitergegeben werden, während im umgekehrten Fall die Größen Mso112 und tso112 weitergegeben werden.

Zur Ermittlung des resultierenden Wertepaars wird also die Sollgröße ermittelt, die (Linearität vorausgesetzt) zum Zeitpunkt der kleinsten Stellzeit vorhanden sein muss (interpolierte Sollgröße zum Zeitpunkt der kleinsten Stellzeit). Der Größte der so ermittelte Sollgrößenwert bestimmt dann das resultierende Wertepaar. Letzteres ist das zur größten interpolierten Sollgröße gehörige ursprüngliche Wertepaar.

Als Sollgröße wird auch bei Ausführungsbeispiel der Figur 11 wie bei den anderen bevorzugt eine Momentengröße eingesetzt, in anderen Anwendungen jedoch anstelle eines Moments die Leistung, die Drehzahl, etc.

## Patentansprüche

1. Verfahren zur Steuerung der Brennkraftmaschine eines Fahrzeugs, wobei wenigstens eine Stellgröße der Brennkraftmaschine zur Steuerung der Luftzufuhr der Zündung und/oder der Kraftstoffeinspritzung in Abhängigkeit einer Sollgröße für eine Ausgangsgröße der Brennkraftmaschine eingestellt wird, **dadurch gekennzeichnet, dass** zusammen mit der Sollgröße eine Sollstellzeit vorgegeben wird, innerhalb derer die Sollgröße eingestellt werden muss, dass geprüft wird, ob abhängig von der vorgegebenen Sollstellzeit und der Sollgröße nach Maßgabe einer vorgegebenen Strategie die Sollgröße mit einer einzigen der Stellgrößen innerhalb der Sollstellzeit realisiert werden kann, dass in diesem Fall diese Stellgröße ausgewählt wird und dass andernfalls eine Kombination von mehreren der Stellgrößen ausgewählt wird, die sicherstellt, dass die Sollgröße innerhalb der Sollstellzeit realisiert wird.

2. Verfahren nach Anspruch 1, **dadurch gekennzeichnet, dass** aus mehreren Wertepaaren der Sollgröße und der Sollstellzeit eine resultierende Sollgröße und eine resultieren de Soll-Stellzeit ausgewählt wird, die der Einstellung der Stellgröße zugrunde gelegt wird.

3. Verfahren nach Anspruch 2, **dadurch gekennzeichnet, dass** der kleinste Sollgrößenwert und die zugehörige Soll-Stellzeit als resultierendes Wertepaar ausgewählt wird.

4. Verfahren nach Anspruch 2, **dadurch gekennzeichnet, dass** als resultierendes Wertepaar die größte Sollgröße und die ihr zugeordnete Soll-Stellzeit ausgewählt wird.

5. Verfahren nach Anspruch 2, **dadurch gekennzeichnet, dass** als resultierende Soll-Stellzeit die kleinste Soll-Stellzeit und als resultierende Sollgröße eine Sollgröße gewählt wird, die aus der der kleinsten Soll-Stellzeit zugeordneten Sollgröße und einer auf der Basis wenigstens eines anderen Wertepaares gebildeten Sollgröße zum Zeitpunkt der Soll-Stellzeit gebildet wird.

6. Verfahren nach Anspruch 5, **dadurch gekennzeichnet, dass** als resultierendes Wertepaar die kleinste Soll-Stellzeit und die Summe der dieser Soll-Stellzeit zugeordneten Sollgröße sowie einer auf der Basis der Sollgröße des wenigstens einen anderen Wertepaars zum Zeitpunkt der Soll-Stellzeit interpolierten Sollgröße gebildet wird.

7. Verfahren nach Anspruch 5, **dadurch gekennzeichnet, dass** als resultierende Soll-Stellzeit die kleinste Soll-Stellzeit und als resultierende Sollgröße die kleinste bzw. die größte Sollgröße zum Zeitpunkt der kleinsten Soll-Stellzeit gebildet wird.

8. Verfahren nach Anspruch 1, **dadurch gekennzeichnet, dass** die Soll Stellzeit kontinuierlich veränderlich vorgebbar ist.

9. Verfahren nach einem der vorhergehenden Ansprüche, **dadurch gekennzeichnet, dass** als resultierende Größen das Wertepaar weitergegeben wird, bei welchem die auf den Zeitpunkt der kleinsten Soll Stellzeit interpolierte Sollgröße am größten ist.

10. Verfahren nach einem der vorhergehenden Ansprüche, **dadurch gekennzeichnet, dass** eine prädizierte Sollgröße vorgesehen ist, wobei als resultierende prädizierte Sollgröße die kleinste der koordinierten prädizierten Sollgrößen ermittelt wird.

11. Vorrichtung zur Steuerung der Brennkraftmaschine eines Fahrzeugs, mit einer Steuereinheit, welche wenigstens eine Stellgröße der Brennkraftmaschine zur Steuerung der Luftzufuhr, der Zündung und/oder der Kraftstoffeinspritzung abhängig von einer Soll größe für eine Ausgangsgröße der Antriebseinheit einstellt, **dadurch gekennzeichnet, dass** Mittel zur Einstellung der wenigstens einen Stellgröße vorgesehen sind, die als Vorgabegröße die Sollgröße und eine Sollstellzeit erhalten, innerhalb derer die Sollgröße einzustellen ist, dass die Mittel prüfen, ob abhängig von der vorgegebenen Sollstellzeit und der Sollgröße nach Maßgabe einer vorgegebenen Strategie die Sollgröße mit einer einzigen der Stellgrößen innerhalb der Sollstellzeit realisiert werden kann, dass die Mittel in diesem Fall diese Stellgröße auswählen und dass die Mittel andernfalls eine Kombination von mehreren der Stellgrößen auswählen, die sicherstellt, dass die Sollgröße innerhalb der Sollstellzeit realisiert wird.

## Claims

1. Method for controlling the internal combustion engine of a vehicle, at least one manipulated variable of the internal combustion engine for controlling the excess air ratio of the ignition and/or the fuel injection being set as a function of a setpoint variable for an output variable of the internal combustion engine, **characterized in that** a desired setting time is set together with the setpoint variable, within which setting time the setpoint variable has to be set, **in that** it is checked whether the setpoint variable can be implemented with one of the manipulated variables within the desired setting time in accordance with a predefined strategy as a function of the predefined desired setting time and the setpoint variable, **in that**, in this case, this manipulated variable is selected, and **in that** otherwise a combination of a plurality of the manipulated variables is selected, which combination ensures that the setpoint variable is implemented within the desired setting time.

2. Method according to Claim 1, **characterized in that** a resulting setpoint variable and a resulting desired setting time are selected from a plurality of value pairs of the setpoint variable and of the desired setting time, said desired setting time being used as the basis for setting the manipulated variable.

3. Method according to Claim 2, **characterized in that** the smallest setpoint variable value and the associated desired setting time are selected as a resulting value pair.

4. Method according to Claim 2, **characterized in that** the largest setpoint variable and the desired setting time to which it is assigned are selected as a resulting value pair.

5. Method according to Claim 2, **characterized in that** the smallest desired setting time is selected as the resulting desired setting time and a setpoint variable which is formed from the setpoint variable assigned to the smallest desired setting time and a setpoint variable which is formed on the basis of the at least one other value pair at the time of the desired setting time is selected as the resulting setpoint variable.

6. Method according to Claim 5, **characterized in that** the smallest desired setting time and the sum of the setpoint variable which is assigned to this desired setting time as well as a setpoint variable which is interpolated on the basis of the setpoint variable of the at least one other value pair at the time of the desired setting time are formed as a resulting value pair.

7. Method according to Claim 5, **characterized in that** the smallest desired setting time is formed as the resulting desired setting time and the smallest or the largest setpoint variable is formed at the time of the smallest desired setting time as the resulting setpoint variable.

8. Method according to Claim 1, **characterized in that** the desired setting time can be predefined in a continuously variable fashion.

9. Method according to one of the preceding claims, **characterized in that** the value pair at which the interpolated setpoint variable is largest at the time of the smallest desired setting time is passed on as the resulting variables.

10. Method according to one of the preceding claims, **characterized in that** a predicted setpoint variable is provided, the smallest of the co-ordinated predicted setpoint variables being determined as a resulting predicted setpoint variable.

11. Device for controlling the internal combustion engine of a vehicle having a control unit which sets at least one manipulated variable of the internal combustion engine for controlling the excess air ratio of the ignition and/or the fuel injection as a function of a setpoint variable for an output variable of the drive unit, **characterized in that** means for setting the at least one manipulated variable are provided, which means receive, as a predefined variable, the setpoint variable and a desired setting time, within which setting time the setpoint variable is to be set, **in that** the means check whether the setpoint variable can be implemented with one of the manipulated variables within the desired setting time in accordance with a predefined strategy as a function of the predefined desired setting time and the setpoint variable, **in that**, in this case, the means select this manipulated variable, and **in that** otherwise the means select a combination of a plurality of the manipulated variables, which combination ensures that the setpoint variable is implemented within the desired setting time.

## Revendications

1. Procédé de commande du moteur à combustion interne d'un véhicule, selon lequel au moins une valeur de réglage du moteur à combustion interne pour la commande de l'arrivée d'air, de l'allumage et/ ou de l'injection de carburant est réglée en fonction d'une grandeur de consigne pour un moteur à combustion interne,
**caractérisé en ce qu'**
un temps de réglage nominal dans l'intervalle duquel la grandeur de consigne doit être réglée est donné en même temps que la grandeur de consigne,
on vérifie si la grandeur de consigne peut être réalisée avec une seule des grandeurs de consigne dans le temps de réglage nominal en fonction du temps de réglage nominal donné et de la grandeur de consigne conformément à une stratégie donnée,
dans ce cas cette valeur de réglage est choisie, et
dans le cas contraire une combinaison de plusieurs valeurs de réglage est sélectionnée pour garantir que la grandeur de consigne est réalisée dans le temps de réglage nominal.

2. Procédé selon la revendication 1,
**caractérisé en ce qu'**
à partir de plusieurs paires de valeurs de la grandeur de consigne et du temps de réglage nominal on choisit une grandeur de consigne résultante et un temps de réglage nominal résultant comme base de réglage de la valeur de réglage.

3. Procédé selon la revendication 2,
**caractérisé en ce que**
la valeur de grandeur de consigne minimum et le temps de réglage nominal correspondant sont sélectionnés en tant que paire de valeurs résultante.

4. Procédé selon la revendication 2,
**caractérisé en ce que**
la grandeur de consigne maximum et le temps de réglage nominal lui étant associé sont sélectionnés en tant que paire de valeurs résultante.

5. Procédé selon la revendication 2,
**caractérisé en ce que**
le temps de réglage nominal minimum est sélectionné en tant que temps de réglage nominal résultant, et une grandeur de consigne, formée à partir de la grandeur de consigne associée au temps de réglage nominal minimum et d'une grandeur de consigne formée sur la base d'au moins une autre paire de valeurs au moment du temps de réglage nominal, est sélectionnée en tant que grandeur de consigne résultante.

6. Procédé selon la revendication 5,
**caractérisé en ce que**
le temps de réglage nominal minimum et la somme des grandeurs de consigne associées à ce temps de réglage nominal de même que d'une grandeur de consigne interpolée sur la base de la grandeur de consigne d'au moins une autre paire de valeurs au moment du temps de réglage nominal est formée en tant que paire de valeurs résultante.

7. Procédé selon la revendication 5,
**caractérisé en ce que**
le temps de réglage nominal minimum est formé en tant que temps de réglage nominal résultant, et la grandeur de consigne minimum et/ou maximum au moment du temps de réglage nominal minimum est formée en tant que grandeur de consigne résultante.

8. Procédé selon la revendication 1,
**caractérisé en ce que**
le temps de réglage nominal peut être donné en continu de manière modifiée.

9. Procédé selon l'une des revendications précédentes, **caractérisé en ce que**
la paire de valeurs pour laquelle la grandeur de consigne interpolée est la plus grande au moment du temps de réglage nominal minimum est transmise en tant que grandeurs résultantes.

10. Procédé selon l'une des revendications précédentes, **caractérisé en ce qu'**
une grandeur de consigne prédite est prévu, la plus petite des grandeurs de consigne prédites coordonnées étant déterminée comme la grandeur de consigne prédite résultante.

11. Dispositif de commande du moteur à combustion interne d'un véhicule équipé d'une unité de commande qui règle au moins une valeur de réglage du moteur à combustion interne pour la commande de l'arrivée d'air de l'allumage et/ou de l'injection de carburant en fonction d'une grandeur de consigne pour une grandeur de sortie de l'unité d'entraînement,
**caractérisé en ce que**
des moyens sont prévus pour régler au moins une valeur de réglage qui reçoivent en tant que grandeur allouée la grandeur de consigne et un temps de réglage nominal dans l'intervalle duquel la grandeur de consigne doit être réglée, les moyens vérifient si la grandeur de consigne peut être réalisée avec une seule des grandeurs de consigne dans le temps de réglage nominal en fonction du temps de réglage nominal donné et de la grandeur de consigne conformément à une stratégie donnée, les moyens choisissent dans ce cas cette valeur de réglage, et dans le cas contraire les moyens sélectionnent une combinaison de plusieurs valeurs de réglage qui garantit que la valeur de réglage est réalisée dans le temps de réglage nominal.
